# EUROPEAN PATENT APPLICATION

(11) **EP 4 502 703 A1**
(43) Date of publication of application: **05.02.2025**
(21) Application number: 23780483.6
(22) Date of filing: 28.03.2023
(51) Int. Cl.: G02B 27/01

(54) **VIRTUAL IMAGE DISPLAY DEVICE**

(30) Priority: 29.03.2022 JP 2022052753
(71) Applicant: FUJIFILM Corporation, Tokyo 106-8620 (JP)
(72) Inventor: ANZAI Akihiro, Minamiashigara-shi, Kanagawa 250-0193 (JP)
(74) Representative: Klunker IP Patentanwälte PartG mbB
(86) International application number: PCT/JP2023/012432
(87) International publication number: WO 2023/190474

(57) **Abstract**

An object is to provide a virtual image display apparatus for a head-up display including a light guide plate and a diffraction element, in which observation of interference light such as sunlight can be suppressed. The virtual image display apparatus includes: an image display device; a light guide plate that guides the image light emitted from the image display device; a diffraction element that emits image light from the light guide plate, and a polarizer that is provided on an emission side of the image light of the diffraction element and has an absorption axis parallel to or tilted with respect to a normal line.

## Description

### BACKGROUND OF THE INVENTION

### 1. Field of the Invention

The present invention relates to a virtual image display apparatus. Specifically, the present invention relates to a virtual image display apparatus used for a head-up display.

### 2. Description of the Related Art

A so-called head-up display (head-up display system) that projects an image to a windshield (windshield glass) of a vehicle or the like to provide information to a driver is known. In the following description, the head-up display will also be referred to as "HUD". "HUD" is an abbreviation for the "head up display".

The driver can obtain various information such as a map, a traveling speed, and a vehicle condition by the HUD while watching the external environment ahead of the driver without largely moving a visual line. Therefore, safer driving can be expected while obtaining various information.

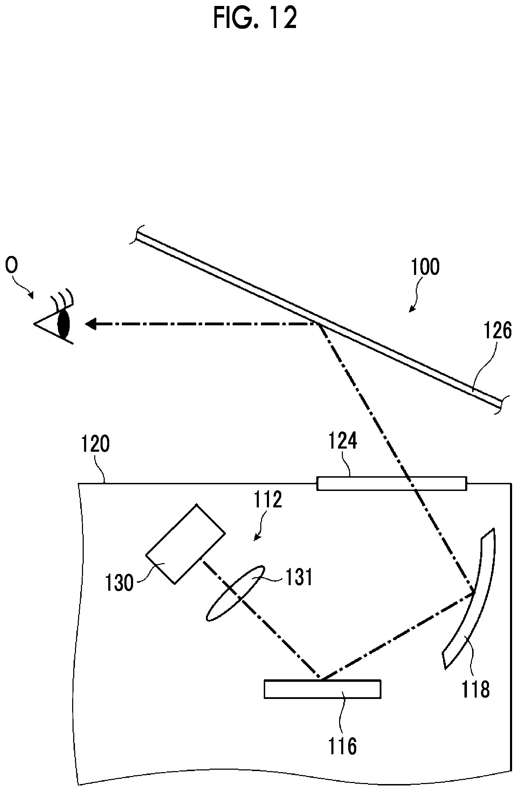

Fig. 12 conceptually shows an example of a general HUD.

In the example shown in the drawing, a HUD 100 is configured to include an image display unit 112, a reflecting mirror 116, a concave mirror 118, and a windshield 126 that acts as a reflective member for reflecting and projecting image light. The image display unit 112 is configured to include an image display device 130 such as a liquid crystal display, and a projection lens 131.

In the HUD 100, the image display unit 112, the reflecting mirror 116, and the concave mirror 118 configure a projector of the HUD, and are accommodated in a lower portion of a dashboard 120 of a vehicle such as an automobile.

In the HUD 100, the image displayed by the image display device 130, that is, the image light is projected by the projection lens 131, is reflected along a predetermined optical path by the reflecting mirror 116 and the concave mirror 118, transmits through a transmission window 124 provided in the dashboard 120, is incident into the windshield 126, and is reflected and projected to be observed as a projection image by a user O.

In the HUD 100, the user O observes a virtual image of the image projected to the windshield 126.

Here, the projector used for the HUD 100 is accommodated in the lower portion of the dashboard of the vehicle as described above, and thus is largely limited in size. Therefore, in the projector for the HUD in the related art, a required optical path length is secured by folding the optical path using a plurality of mirrors.

Therefore, the projector used for the HUD 100 is likely to have a complicated structure. Further, as described above, a space in the lower portion of the dashboard is small, and thus the degree of freedom in the design of the projector is low.

As a HUD having a small and simple configuration where the above-described problem is solved, a HUD where a light guide plate (optical waveguide) and a diffraction element (hologram) are combined as described in JP2021-528681A is known.

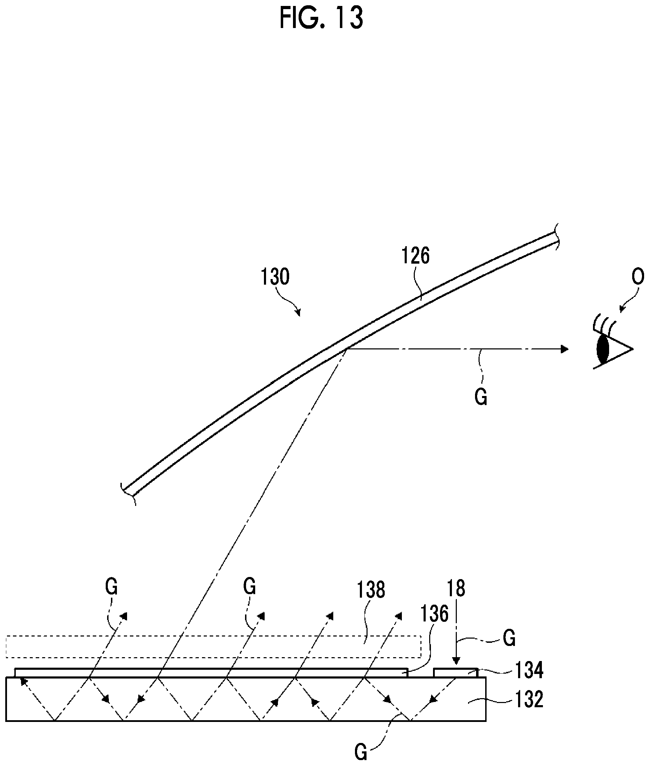

Fig. 13 conceptually shows an example of the HUD.

As shown in Fig. 13, a HUD 130 includes a light guide plate 132, an incidence diffraction element 134, and an emission diffraction element 136.

In the HUD 130, image light G emitted from an image display device (not shown) is diffracted by the incidence diffraction element 134 and is incident into the light guide plate 132 at an angle where total reflection occurs. The image light G incident into the light guide plate 132 is totally reflected repeatedly and is guided (propagates) in the light guide plate 132.

Here, the emission diffraction element 136 is provided on an upper surface (hereinafter, also referred to as an emission surface) of the light guide plate 132 in the drawing. A part of the light guided in the light guide plate 132 is incident into the emission diffraction element 136, is diffracted, and is emitted upward from the emission surface. The image light G emitted from the light guide plate 132 is incident into the windshield 126, is reflected and projected, and is observed as a projection image by the user O, as in the above-described case.

In the HUD 130 including the light guide plate 132, for example, the light guide plate 132 can be disposed above a dashboard of an automobile or the like. Therefore, the limit in size is significantly reduced as compared with the HUD 100 in the related art shown in Fig. 12.

In addition, for example, it is not necessary to fold the optical path using the mirrors, and projection light corresponding to the size of the light guide plate 132 can be emitted. Therefore, the device configuration of the HUD can be simplified.

### SUMMARY OF THE INVENTION

Here, in the HUD 130 shown in JP2021-528681A including the light guide plate 132 and the diffraction element, in a case where external light such as sunlight is incident into the light guide plate 132 and is guided and emitted, there is a problem in that the light is observed as interference light by the user O.

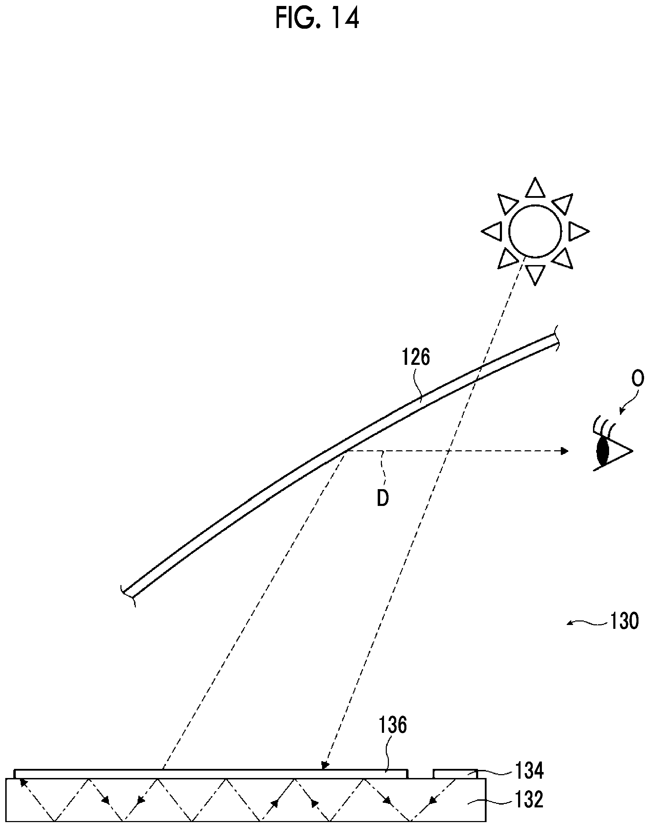

That is, as conceptually shown in Fig. 14, in the HUD 130, external light (broken line) such as sunlight transmits through the windshield 126 and enters into the vehicle to reach the light guide plate 132.

Here, the emission diffraction element 136 is provided on the emission surface of the light guide plate 132. Therefore, the external light is diffracted by the emission diffraction element 136 and is incident into the light guide plate 132 at an angle where total reflection occurs depending on an incidence direction.

The external light incident into the light guide plate 132 as described above is totally reflected repeatedly and is guided in the light guide plate 132 as in the image light such that a part thereof is diffracted by the emission diffraction element 136 and is emitted from the light guide plate 132 together with the image light. The image light and the external light emitted from the light guide plate 132 are incident into the windshield 126 as in the above-described case, are reflected and projected, and are observed as interference light D by the user O. As a result, glare occurs in the image observed by the user O, and the user O feels dizzy due to the interference light D.

Further, depending on an incidence angle into the light guide plate 132, the external light that is incident into the light guide plate 132 and is guided and emitted may be emitted from the light guide plate 132 to directly reach the user O as the interference light D without being incident into the windshield 126.

In order to solve the problem, in JP2021-528681A, as indicated by a broken line in Fig. 13, an optical filter 138 (bandpass filter) that absorbs light having a wavelength other than a wavelength of the image light G is provided on the emission surface side of the diffraction element.

As a result, in JP2021-528681A, external light such as sunlight is prevented from being incident into the light guide plate 132, glare of the image observed as the interference light D by the user O is suppressed, and the dizziness of the user O caused by the interference light D is suppressed.

An object of the present invention is to provide a virtual image display apparatus for a HUD including a light guide plate and a diffraction element as in JP2021-528681A, in which observation of interference light by a user can be suppressed using a new method.

In order to achieve the above-described object, the present invention has the following configurations.
[1] A virtual image display apparatus for a head-up display comprising:
   an image display device that emits image light;
   a light guide plate that guides the image light emitted from the image display device;
   an emission element that emits the image light guided in the light guide plate from the light guide plate; and
   a first polarizer that is provided on an emission side of the image light of the emission element and has an absorption axis parallel to or tilted with respect to a normal line.
[2] The virtual image display apparatus according to [1],
   in which an angle between the normal line of the first polarizer and the absorption axis of the first polarizer is 0° to 70°.
[3] The virtual image display apparatus according to [1] or [2], further comprising:
   a second polarizer that is provided on the emission side of the emission element and has an absorption axis in a direction orthogonal to a normal line.
[4] The virtual image display apparatus according to any one of [1] to [3],
   in which the emission element is a diffraction element.
[5] A virtual image display apparatus for a head-up display, comprising:
   an image display device that emits image light;
   a light guide plate that guides the image light emitted from the image display device;
   an emission element that emits the image light guided in the light guide plate from the light guide plate; and
   a structure that is provided on an emission side of the image light of the emission element and where a plurality of metal plates standing from the emission element are arranged.
[6] The virtual image display apparatus according to [5],
   in which an angle between a normal line of the light guide plate and the metal plate is 0° to 70°.
[7] The virtual image display apparatus according to [5] or [6],
   in which the metal plate has light absorbing properties.
[8] The virtual image display apparatus according to any one of [5] to [7],
   in which the emission element is a diffraction element.
[9] A virtual image display apparatus for a head-up display, comprising:
   an image display device that emits image light;
   a light guide plate that guides the image light emitted from the image display device;
   an emission element that emits the image light guided in the light guide plate from the light guide plate; and
   an uneven structure that is provided on an emission side of the image light of the emission element.
[10] The virtual image display apparatus according to claim 9, further comprising:
   a light reflecting layer that is provided between the emission element and the uneven structure.
[11] The virtual image display apparatus according to [9] or [10], further comprising:
   a planarizing film that planarizes a surface of the uneven structure.
[12] The virtual image display apparatus according to [11],
   in which a difference in refractive index between the planarizing film and the uneven structure is 0.3 or less.
[13] The virtual image display apparatus according to any one of [9] to [12],
   in which the emission element is a diffraction element.

According to the present invention, in a virtual image display apparatus for a HUD including a light guide plate and a diffraction element, observation of interference light by a user can be suppressed using a new method.

### BRIEF DESCRIPTION OF THE DRAWINGS

Fig. 1 is a diagram conceptually showing an example of a virtual image display apparatus according to the present invention.
Fig. 2 is a schematic perspective view showing the virtual image display apparatus shown in Fig. 1.
Fig. 3 is a perspective view conceptually showing another example of the virtual image display apparatus according to the present invention.
Fig. 4 is a diagram conceptually showing an example of a polarizer used in the virtual image display apparatus shown in Fig. 1.
Fig. 5 is a diagram conceptually showing another example of the polarizer used in the virtual image display apparatus shown in Fig. 1.
Fig. 6 is a diagram conceptually showing another example of the virtual image display apparatus according to the present invention.
Fig. 7 is a schematic perspective view showing a structure used in the virtual image display apparatus shown in Fig. 6.
Fig. 8 is a diagram conceptually showing another example of the virtual image display apparatus according to the present invention.
Fig. 9 is a diagram conceptually showing an example of an uneven structure used in the virtual image display apparatus shown in Fig. 8.
Fig. 10 is a diagram conceptually showing another example of the uneven structure used in the virtual image display apparatus shown in Fig. 8.
Fig. 11 is a diagram conceptually showing another example of the uneven structure used in the virtual image display apparatus shown in Fig. 8.
Fig. 12 is a diagram conceptually showing an example of a general virtual image display apparatus.
Fig. 13 is a diagram conceptually showing an example of a virtual image display apparatus in the related art.
Fig. 14 is a conceptual diagram showing an action of the virtual image display apparatus shown in Fig. 13.

### DESCRIPTION OF THE PREFERRED EMBODIMENTS

Hereinafter, a virtual image display apparatus according to an embodiment of the present invention will be described in detail based on preferable examples shown in the accompanying drawings.

In the present specification, numerical ranges represented by "to" include numerical values before and after "to" as lower limit values and upper limit values.

In the present specification, visible light refers to light having a wavelength which can be observed by human eyes among electromagnetic waves and refers to light in a wavelength range of 380 to 780 nm. Invisible light refers to light in a wavelength range of shorter than 380 nm or longer than 780 nm. In addition, although not limited thereto, in visible light, light in a wavelength range of 420 to 490 nm refers to blue light (B light), light in a wavelength range of 495 to 570 nm refers to green light (G light), and light in a wavelength range of 620 to 750 nm refers to red light (R light). Further, although not limited thereto, infrared light refers to invisible light in a wavelength range of longer than 780 nm and 2000 nm or shorter.

In addition, in the present invention, the description regarding parallel, perpendicular, orthogonal, or the like includes an error range generally allowed in the technical field. Specifically, parallel, perpendicular, orthogonal, and the like represent that a difference from the exact match is within a range of less than 5°. The difference from the exact match is preferably less than 4° and more preferably less than 3°.

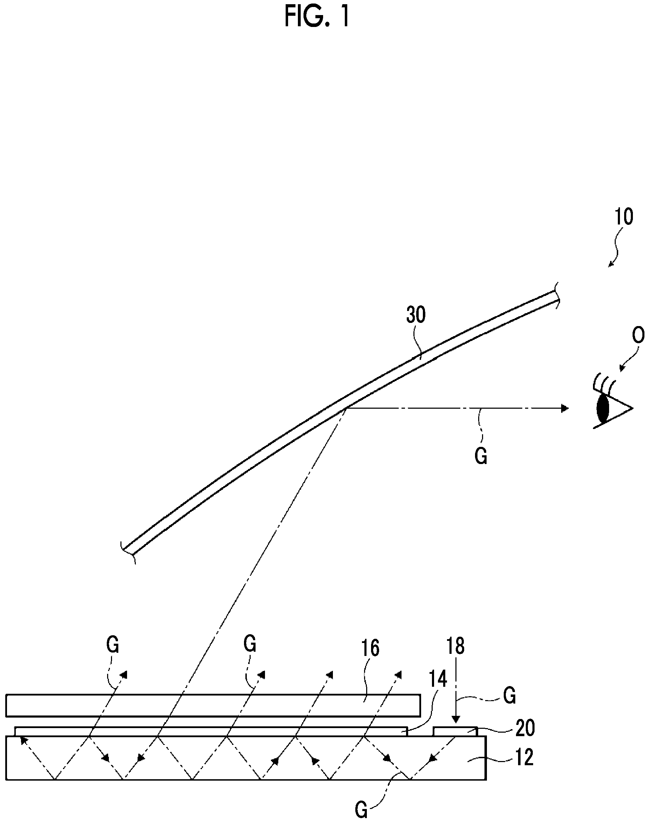

Fig. 1 conceptually shows an example of a virtual image display apparatus according to a first aspect of the present invention.

A virtual image display apparatus 10 shown in Fig. 1 is a virtual image display apparatus for a HUD, and includes a light guide plate 12, an emission diffraction element 14, a first polarizer 16, and an image display device 18. In addition, the virtual image display apparatus 10 displays (projects) an image to a user O, for example, using a windshield 30 of a vehicle such as an automobile. The emission diffraction element 14 is the emission element according to the embodiment of the present invention.

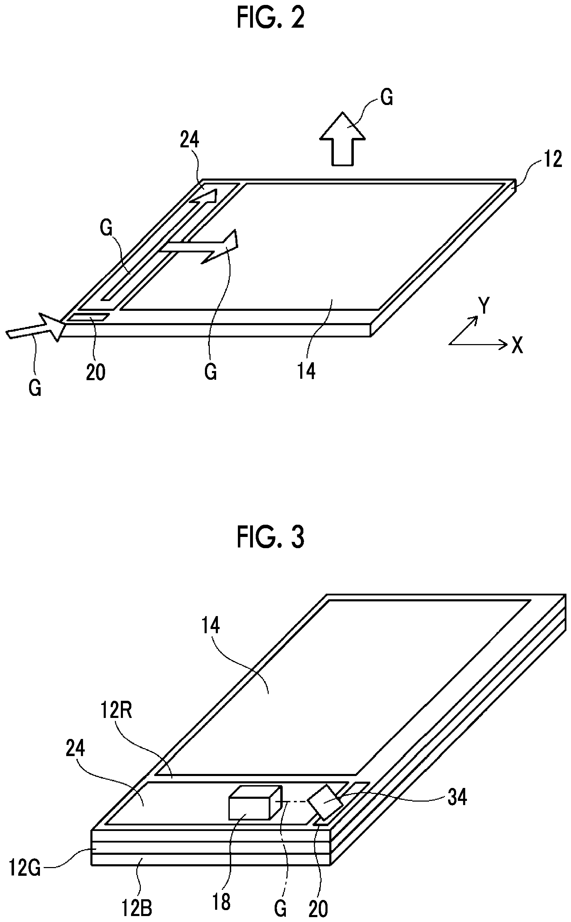

Although not shown in Fig. 1, the virtual image display apparatus 10 further includes an incidence diffraction element 20 and an intermediate diffraction element 24 (refer to Fig. 2).

The virtual image display apparatus 10 is basically the same as the virtual image display apparatus (device that forms a virtual image (VB)) described in JP2021-528681A, except that it includes the first polarizer 16 instead of the optical filter 138 that absorbs external light such as sunlight to suppress interference light.

Accordingly, as in the above-described HUD 130 shown in Fig. 13, in the virtual image display apparatus 10, the image light G emitted from the image display device 18 is also diffracted by the incidence diffraction element 20 to be incident into the light guide plate 12 at an angle where total reflection occurs. The image light G incident into the light guide plate 12 is totally reflected repeatedly and is guided (propagates) in the light guide plate 12.

The emission diffraction element 14 is bonded to an emission surface (upper surface in the drawing) of the light guide plate 12. A part of the light guided in the light guide plate 12 is incident into the emission diffraction element 14, is diffracted, and is emitted from the light guide plate 12. The image light emitted from the light guide plate 12 is incident into the windshield 30, is reflected and projected, and is observed by the user O. The user O observes a virtual image of the image projected to the windshield 30 as in the well-known HUD (virtual image display apparatus).

In the following description, the virtual image display apparatus 10 will also be referred to as the HUD 10.

Fig. 2 is a schematic perspective view showing the light guide plate 12.

As shown in Fig. 2, in the light guide plate 12, a main surface has a rectangular plate shape, and the incidence diffraction element 20 is provided in the vicinity of one corner portion of one main surface. In addition, the intermediate diffraction element 24 that is long in a lateral direction is provided near the incidence diffraction element 20 and in the vicinity of an end part in a longitudinal direction. Further, in the light guide plate 12, in a region of the main surface where the incidence diffraction element 20 and the intermediate diffraction element 24 are not provided, the emission diffraction element 14 is provided to cover substantially the entire surface.

The main surface is the maximum surface of a plate-like material (a sheet-like material, a film, or a layer), that is, both surfaces of the plate-like material in a thickness direction.

In addition, in the following description, for convenience of description, it is assumed that a vertical direction on the paper plane of the light guide plate 12 is a Y direction and a horizontal direction on the paper plane is an X direction.

As in the HUD 130 shown in Fig. 13, the incidence diffraction element 20 is a diffraction element for causing the image light G emitted from the image display device 18 to be incident into the light guide plate 12.

The incidence diffraction element 20 diffracts the image light G emitted from the image display device 18 to be guided in the Y direction at an angle where total reflection occurs in the light guide plate 12.

As indicated by arrows, the image light G incident into the light guide plate 12 by the incidence diffraction element 20 is guided in the Y direction in the vicinity of an end part in the X direction while being totally reflected repeatedly in the light guide plate 12, and a part of the light is incident into the intermediate diffraction element 24. Due to the guidance of the image light G in the Y direction, the image light (image) emitted from the image display device 18 is enlarged in the Y direction.

The intermediate diffraction element 24 is a diffraction element that deflects a light guide direction of the image light G in the light guide plate 12. A part of the image light G that is guided in the Y direction in the vicinity of an end part in the X direction is incident into the intermediate diffraction element 24, and is diffracted in the X direction of the light guide plate 12 at an angle where total reflection occurs in the light guide plate 12, that is, to the emission diffraction element 14 as indicated by arrows. In Fig. 2, although only one arrow is shown, the diffraction of the image light G from the intermediate diffraction element 24 to the emission diffraction element 14 is performed over the entire range in a longitudinal direction of the intermediate diffraction element 24 that is long in the Y direction of the light guide plate 12.

The image light G diffracted by the intermediate diffraction element 24 is guided in the X direction while being totally reflected in the light guide plate 12, and a part of the light is incident into the emission diffraction element 14.

As in the HUD 130 shown in Fig. 13, the emission diffraction element 14 is a diffraction element for emitting the image light G from the light guide plate 12. A part of the image light G guided in the X direction while being totally reflected in the light guide plate 12 is incident into the emission diffraction element 14 and is diffracted such that the image light G is emitted from the light guide plate 12 as indicated by an arrow moving upward in the drawing and shown in Fig. 1 above. In addition, due to the guidance of the image light G in the X direction, the image light (image) emitted from the image display device 18 is enlarged in the X direction.

As described above, the image light G emitted from the light guide plate 12 is incident into the windshield 30, is reflected and projected, and is observed by the user O. In Fig. 2, although only one arrow of the image light is shown, the emission of the image light from the light guide plate 12 by the emission diffraction element 14 is performed over the entire surface of the emission diffraction element 14.

In the example shown in Fig. 2, one light guide plate 12 is provided.

However, the present invention is not limited to this configuration. For example, in a case where the HUD 10 displays a full color image including red (R), green (G), and blue (B), as conceptually shown in Fig. 3, a light guide plate 12R that guides image light of R, a light guide plate 12G that guides image light of G, and a light guide plate 12B that guides image light of B may be provided according to each of the colors.

The lamination order of the light guide plates is not limited to the example of Fig. 3.

In each of the light guide plate 12R, the light guide plate 12G, and the light guide plate 12B, the incidence diffraction element 20, the intermediate diffraction element 24, and the emission diffraction element 14 are provided.

In the diffraction elements provided in each of the light guide plates, at least the incidence diffraction element 20 and the emission diffraction element 14 have wavelength dependence (wavelength selectivity) diffract only the image light of the corresponding light to be incident into the light guide plate. Further, it is preferable that the intermediate diffraction element 24 has wavelength dependence and diffracts only the image light of the corresponding light. In this case, the diffraction element into which monochromatic light is incident does not need to have wavelength dependence. That is, in the present example, the diffraction element where the light guide plate 12B is provided does not need to have wavelength dependence.

However, in the configuration including a plurality of light guide plates, it is preferable that all of the diffraction elements provided in each of the light guide plates have wavelength dependence.

In the example shown in Fig. 3, the image light emitted from the image display device 18 is deflected to the light guide plate 12R by a mirror 34.

In the image light deflected by the mirror 34, the R image light is diffracted by the incidence diffraction element 20 provided in the light guide plate 12R to be incident into the light guide plate 12R. The G image light and the B image light transmit through the incidence diffraction element 20.

In addition, the G image light is diffracted by the incidence diffraction element 20 provided in the light guide plate 12G to be incident into the light guide plate 12G The B image light transmits through the incidence diffraction element.

Further, the B image light is diffracted by the incidence diffraction element 20 provided in the light guide plate 12B to be incident into the light guide plate 12B.

The image light incident into each of the corresponding light guide plates is guided in the Y direction as in Fig. 2, is deflected in the X direction as the light guide direction by the intermediate diffraction element 24, and is emitted from the light guide plate to the windshield 30 by the emission diffraction element 14. The Y direction is a lateral direction of the light guide plate, and the X direction is a longitudinal direction of the light guide plate.

Here, the B image light emitted from the light guide plate 12B transmits through the emission diffraction elements 14 provided in the light guide plate 12G and the light guide plate 12R, and is emitted to the windshield 30. In addition, the G image light emitted from the light guide plate 12G transmits through the emission diffraction elements 14 provided in the light guide plate 12R, and is emitted to the windshield 30.

In the HUD 10 (virtual image display apparatus) according to the embodiment of the present invention, the image display device 18, the light guide plate 12, and each of the diffraction elements are not particularly limited, and various well-known elements can be used.

For example, as the image display device 18, various well-known image display devices such as a liquid crystal display device, a liquid crystal on silicon (LCOS), an organic electroluminescence (organic EL) display, or digital light processing (DLP) using a digital micromirror device (DMD) can be used. Optionally, a projection lens may be combined with these image display devices.

As the light guide plate 12, various well-known light guide plates used for a backlight unit of a liquid crystal display device, AR glasses, or the like, for example, a light guide plate formed of glass or a light guide plate formed of a plastic such as an acrylic resin can be used.

Further, as the diffraction element, various well-known diffraction elements such as a liquid crystal diffraction element, a holographic diffraction element (hologram), a volume hologram diffraction element, or a surface relief diffraction element can be used.

The diffraction element may be a reflective type or a transmissive type.

In addition, each of the diffraction elements may be bonded to the light guide plate 12 with a well-known method using an optical clear adhesive (OCA).

In the HUD 10 in the example shown in the drawing, the diffraction element 14 is used as the emission element for emitting the image light G from the light guide plate 12. However, the present invention is not limited to this configuration.

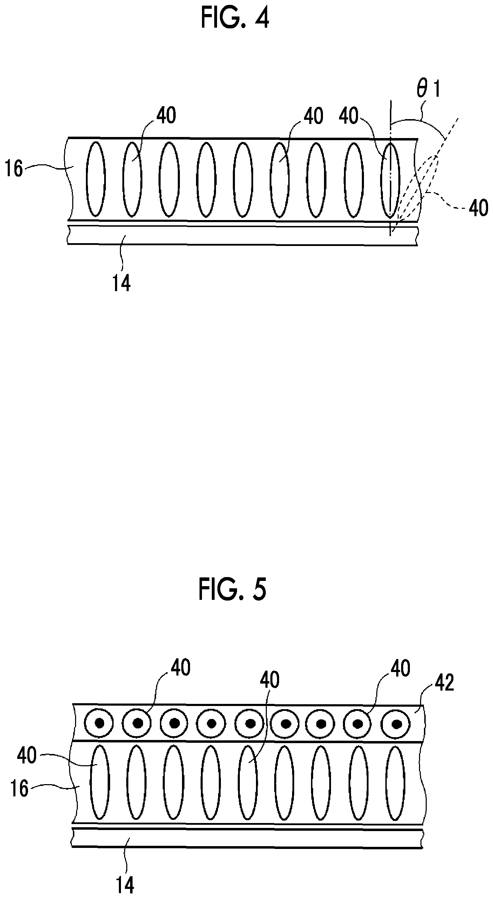

For example, as shown in Fig. 4 of JP2021-528681A, in the light guide plate 12, a plurality of half mirrors that are tilted with respect to the main surface may be provided in the light guide direction of the image light G to function as the emission element that emits the image light G from the light guide plate.

Regarding this point, the same can be applied to the other aspects of the present invention.

In the HUD 10 in the example shown in the drawing, the image light G is incident into the windshield 30 and is reflected and projected. However, the present invention is not limited to this example.

That is, in the HUD 10 (virtual image display apparatus) according to the embodiment of the present invention, a combiner such as a half mirror for reflecting an image may be used such that the image light G emitted from the light guide plate 12 is incident into the combiner and is reflected and projected. In addition, a combiner for reflecting the image light G may be provided in the windshield 30.

As shown in Fig. 1, the HUD 10 according to the first aspect of the present invention may include the first polarizer 16 on the emission side of the image light G of the emission diffraction element 14. The first polarizer 16 is a polarizer having an absorption axis parallel to or tilted with respect to a normal line.

The normal line is a line orthogonal to a surface and, in the case of the first polarizer 16, is a line orthogonal to the main surface of the first polarizer 16 and parallel to the thickness direction.

Fig. 4 conceptually shows an example of the first polarizer 16. In the first polarizer 16 illustrated in Fig. 4, a dichroic substance 40 is used as the absorption axis. Therefore, a major axis of the dichroic substance 40 is aligned to be parallel to (vertical alignment) or tilted with respect to the normal line.

In the HUD 10 according to the embodiment of the present invention, by providing the first polarizer 16 on the emission side of the image light G of the emission diffraction element 14, incidence of external light such as sunlight into the light guide plate 12 is suppressed, and observation of the external light as interference light by the user O is suppressed.

As described above with reference to Fig. 14, in the HUD including the light guide plate and the diffraction elements, when external light such as sunlight reaches the light guide plate, the external light is diffracted by the emission diffraction element provided on the emission surface of the light guide plate, and a part of the external light is incident at an angle where total reflection occurs.

This external light is guided in the light guide plate as in the image light, is diffracted by the emission diffraction element, and is emitted from the light guide plate. Next, together with the image light, the external light is incident into the windshield, is reflected and projected or is directly emitted from the light guide plate to the user O, and is observed as interference light by the user O. As a result, glare occurs in the image observed by the user O, and the user O feels dizzy due to the interference light.

On the other hand, the HUD 10 according to the embodiment of the present invention includes the first polarizer 16 on the emission surface side of the emission diffraction element 14. As described above, the first polarizer 16 aligns the absorption axis, that is, the major axis of the dichroic substance 40 to be parallel to (vertical alignment) or tilted with respect to the normal line of the first polarizer 16.

In the first polarizer 16 where the dichroic substance 40 is used as the absorption axis, a direction of the major axis of the dichroic substance 40 is the absorption axis. In a case where light incident into the first polarizer 16 travels in a direction parallel (substantially parallel) to the absorption axis, the light transmits through the first polarizer 16.

On the other hand, in a case where light incident into the first polarizer 16 travels in a direction intersecting with the absorption axis, the light is absorbed by the absorption axis, that is, by the dichroic substance in the example shown in the drawing.

Therefore, by setting the major axis of the dichroic substance 40, that is, the absorption axis of the first polarizer 16 to be parallel to the traveling direction of the image light G emitted from the light guide plate 12, the image light G emitted from the light guide plate 12 transmits through the first polarizer 16 and is incident into the windshield 30.

On the other hand, the external light such as sunlight that is incident from the windshield 30 to be interference light is incident from various directions. That is, in the external light as the interference light, the amount of light parallel to the image light G emitted from the light guide plate 12 is very small. Accordingly, the external light such as sunlight that is interference light is mostly absorbed by the first polarizer 16 before being incident into the emission diffraction element 14, and the amount of the external light incident into the light guide plate 12 is very small.

As a result, in the HUD 10 according to the embodiment of the present invention including the first polarizer 16, the external light that is incident into the light guide plate 12 to be interference light can be significantly suppressed, the interference light observed by the user O can be reduced, and glare of the image observed by the user O and dizziness of the user by the interference light can be suppressed.

In the first polarizer 16, the dichroic substance 40 is used as the absorption axis.

The dichroic substance (dichroic coloring agent) is not particularly limited, and examples thereof include an azo coloring agent and an anthraquinone coloring agent. The dichroic substances may be used alone or in combination of two or more kinds.

In the present invention, the dichroic substance is defined as a compound having a function of absorbing light.

The dichroic substance may have any of an absorption maximum or an absorption band and preferably has an absorption maximum in any of a yellow (Y) range, a magenta (M) range, or a cyan (C) range.

In addition, two or more kinds of dichroic substances may be used. In this case, it is preferable that a mixture of dichroic substances having an absorption maximum in the Y range, the M range, and the C range is used, and it is more preferable that dichroic substances are mixed and used to absorb all the light components in a visible range (380 to 780 nm). Here, the yellow range refers to a wavelength range of 420 to 490 nm, the magenta range refers to a wavelength range of 495 to 570 nm, and the cyan range refers to a wavelength range of 620 to 750 nm.

Next, a chromophore used in the dichroic substance will be described.

The chromophore of the dichroic substance is not particularly limited, and can be appropriately selected depending on the purpose. Examples of the chromophore include an azo coloring agent, an anthraquinone coloring agent, a perylene coloring agent, a merocyanine coloring agent, an azomethine coloring agent, a phthaloperylene coloring agent, an indigo coloring agent, an azulene coloring agent, a dioxazine coloring agent, a polythiophene coloring agent, and a phenoxazine coloring agent. Among these, an azo coloring agent, an anthraquinone coloring agent, or a phenoxazine coloring agent is preferable. In particular, an anthraquinone coloring agent or a phenoxazone coloring agent (for example, phenoxazin-3-one) is more preferable.

Specific examples of the coloring agent include the compounds described in paragraphs "0022" to "0075" of JP2008-275976A, the contents of which are incorporated herein by reference.

The absorption axis of the first polarizer 16 is not limited to the dichroic substance, and various birefringent materials can be used. Examples of the birefringent material include anisotropic metal nanoparticles and carbon nanotubes. However, as the birefringent material, the dichroic substance 40 shown in Fig. 4 is more suitably used.

The anisotropic metal nanoparticles are rod-like metal fine particles having a nanosize of several nanometers to 100 nm. The rod-like metal fine particles are particles having an aspect ratio (major axis length/minor axis length) of 1.5 or more.

The anisotropic metal nanoparticles exhibit surface plasmon resonance and exhibit absorption in an ultraviolet to infrared range. In the anisotropic metal nanoparticles having a minor axis length of 1 to 50 nm, a major axis length of 10 to 1,000 nm, and an aspect ratio of 1.5 or more, an absorption position can vary between a minor axis direction and a major axis direction. Therefore, a polarizer where the anisotropic metal nanoparticles are aligned to be parallel to or tilted with respect to the normal line of the film is an anisotropic absorbing film.

The carbon nanotubes are elongated tubular carbon having a fiber diameter of 1 to 1,000 nm, a length of 0.1 to 1,000 µm, and an aspect ratio of 100 to 10,000.

As a method of preparing the carbon nanotubes, for example, an arc discharge method, a laser vaporization method, a thermal CVD method, or a plasma CVD method is known. As the carbon nanotubes obtained using an arc discharge method or a laser vaporization method, single wall carbon nanotubes (Single Wall Nanotube: SWNT) including one graphene sheet and multi wall carbon nanotubes (Maluti Wall Nanotube: MWNT) including a plurality of graphene sheets are present.

In addition, in the thermal CVD method and the plasma CVD method, MWNT can be mainly prepared. SWNT has a structure in which one graphene sheet is wound in a tubular shape, the graphene sheet having a structure where carbon atoms are linked in a hexagonal shape through the strongest bond called a SP2 bond.

In the first polarizer 16, various alignment states can be used as long as the absorption axis is parallel to or tilted with respect to the normal line of the first polarizer 16. In the first polarizer 16, an angle θ1 between the absorption axis and the normal line (two-dot chain line) of the first polarizer 16 is preferably 0° to 70°.

By setting the angle of the absorption axis to be in the above-described range, the image light G emitted from the light guide plate 12 can suitably transmit through the first polarizer 16, and interference light such as sunlight can be suitably prevented from being incident into the light guide plate 12.

In the first polarizer 16, the angle θ1 between the absorption axis and the normal line of the first polarizer 16 is more preferably 10° to 60° and still more preferably 15° to 50°.

Here, a direction (alignment direction) of the absorption axis in the first polarizer 16 can be verified, for example, by observing a cross section of the polarizer with a transmission electron microscope (TEM).

As conceptually shown in Fig. 5, it is preferable that the HUD 10 includes a second polarizer 42 in addition to the first polarizer 16.

In the second polarizer 42, the dichroic substance 40, that is, an absorption axis is aligned in a direction orthogonal to a normal line of the second polarizer 42. That is, in the second polarizer 42, the dichroic substance 40, that is, the absorption axis is horizontally aligned. The lamination order of the first polarizer 16 and the second polarizer 42 may be reversed.

The external light such as sunlight that is interference light may transmit through the windshield 30 to be polarized light.

By providing the second polarizer 42 where the dichroic substance 40 is horizontally aligned, the polarized light that is incident into the second polarizer 42 to be interference light can be absorbed. In addition, even in a case where the light as interference light is unpolarized light, half of the external light that is incident into the second polarizer 42 to be interference light can be absorbed.

The polarizer may be prepared using a well-known method. Examples of the method include a method of using a transparent resin film as a support and forming a polarizing film on the support with a metal nanorod deposition method in a liquid crystal alignment field, a guest-host liquid crystal method, an anodized alumina method, or the like. In particular, the guest-host liquid crystal method is preferable. As the support, a low-retardation resin film, for example, a cellulose acylate film such as a triacetyl cellulose (TAC) film is preferably used.

Examples of the above-described method include a method described in paragraphs "0087" to "0108" of JP2008-275976A, the contents is incorporated herein by reference.

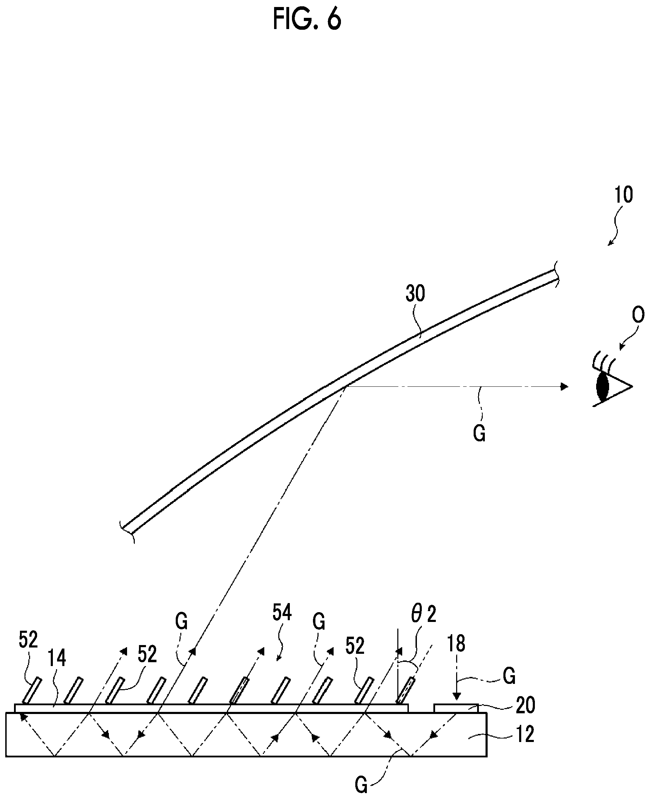

Fig. 6 conceptually shows an example of a virtual image display apparatus according to a second aspect of the present invention.

A virtual image display apparatus 50 according to the second aspect of the present invention has the same basic configuration as the above-described HUD 10 according to the first aspect, and includes a structure 54 on the emission side of the image light G of the emission diffraction element 14 instead of the first polarizer 16. In the structure 54, a plurality of metal plates 52 that stand from the emission diffraction element 14 are arranged.

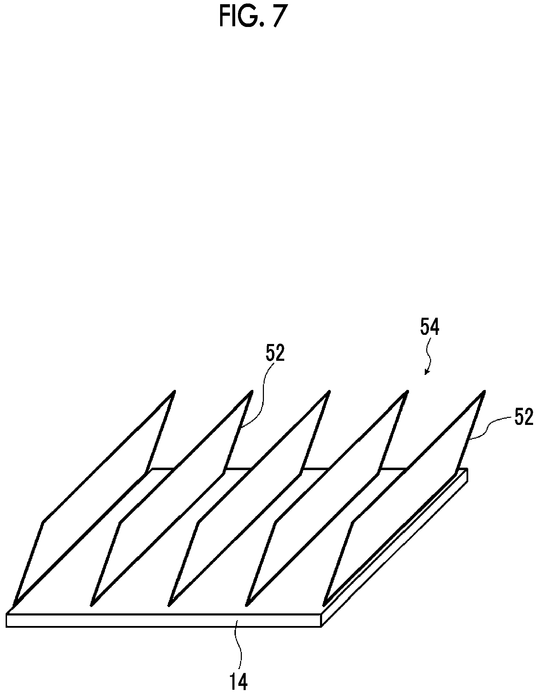

Hereinafter, the virtual image display apparatus 50 will also be referred to as the HUD 50. In addition, the structure 54 will also be referred to as the louver 54. Fig. 7 is a schematic perspective view showing the louver 54.

The metal does not allow transmission of light (visible light). Accordingly, by setting the metal plates 52 of the louver 54 to be parallel to the traveling direction of the image light G emitted from the light guide plate 12 by the emission diffraction element 14, the image light G emitted from the light guide plate 12 transmits through the louver 54 (metal plates 52) and is incident into the windshield 30.

In addition, as described above, the external light such as sunlight that is incident from the windshield 30 to be interference light is incident from various directions. That is, in the external light, the amount of light parallel to the image light G emitted from the light guide plate 12 is very small. Accordingly, the external light such as sunlight that is interference light is mostly shielded by the louver 54 (metal plates 52) before being incident into the emission diffraction element 14, and the amount of the light incident into the light guide plate 12 is very small.

As a result, in the HUD 50 according to the embodiment of the present invention including the louver 54, the external light that is incident into the light guide plate 12 to be interference light can be significantly suppressed, the interference light observed by the user O can be reduced, and glare of the image observed by the user O and dizziness of the user by the interference light can be suppressed.

In the louver 54, the metal plate 52 is not limited, and various well-known metal plates can be used. For example, a metal plate consisting of a metal having excellent heat resistance, such as stainless steel or aluminum, is suitably used.

It is preferable that the metal plates 52 of the louver 54 have light absorbing properties.

A method of treating the metal plates 52 to have light absorbing properties is not particularly limited, and well-known methods such as a method of providing a light absorbing layer such as a black layer or a method of providing a metal film such as gold or copper that absorbs visible light can be used.

In addition, an antireflection film (non-reflective film) is also suitably provided on the surface of the metal plate 52.

As the antireflection film provided on the surface of the metal plate 52, various well-known antireflection films such as a dielectric multi-layer film where a layer having a high refractive index and a layer having a low refractive index are alternately laminated or a moth eye film can be used.

Further, by treating the surface of the metal plate 52 to have an uneven shape (roughening treatment), external light that is reflected from the metal plate 52 to be interference light is scattered and is not likely to be incident into the light guide plate 12, which is suitable.

In the louver 54, as long as the metal plates 52 stand from the emission diffraction element 14, for example, an angle between the metal plates 52 and the emission diffraction element 14 is not limited.

In the louver 54, an angle θ2 between the metal plates 52 and the normal line (two-dot chain line) of the light guide plate 12 is preferably 0° to 70°.

By setting the angle of the metal plates 52 to be in the above-described range, the image light G emitted from the light guide plate 12 can suitably transmit through the louver 54, and external light such as sunlight that is interference light can be suitably prevented from being incident into the light guide plate 12.

In the louver 54, the angle θ2 between the metal plates 52 and the normal line of the light guide plate 12 is more preferably 10° to 60° and still more preferably 15° to 50°.

In the louver 54, an arrangement interval of the metal plates 52 is not particularly limited and may be appropriately set depending on the area of the light guide plate, the angle θ2 between the metal plates 52 and the normal line of the light guide plate 12, the height of the metal plates 52, the thickness of the metal plates 52, and the like.

The arrangement interval of the metal plates 52 is preferably 5 to 300 mm and more preferably 10 to 100 mm.

In addition, in the louver 54, an arrangement direction, a tilt direction, and the like of the metal plates 52 are not limited and may be appropriately set depending on the use of the HUD 50. It is preferable that the metal plates 52 are arranged in a traveling direction of a vehicle or the like. In addition, it is preferable that the metal plates 52 are tilted to the inside of the vehicle or the like.

In the HUD 50, as shown in Fig. 7, the metal plates 52 may be directly arranged on the emission diffraction element 14 to configure the louver 54.

Alternatively, a support having sufficient transmittance to the image light G emitted from the light guide plate 12 may be used such that the metal plates 52 are arranged on the support to configure the louver 54, and this louver 54 may be arranged on the emission surface of the emission diffraction element 14.

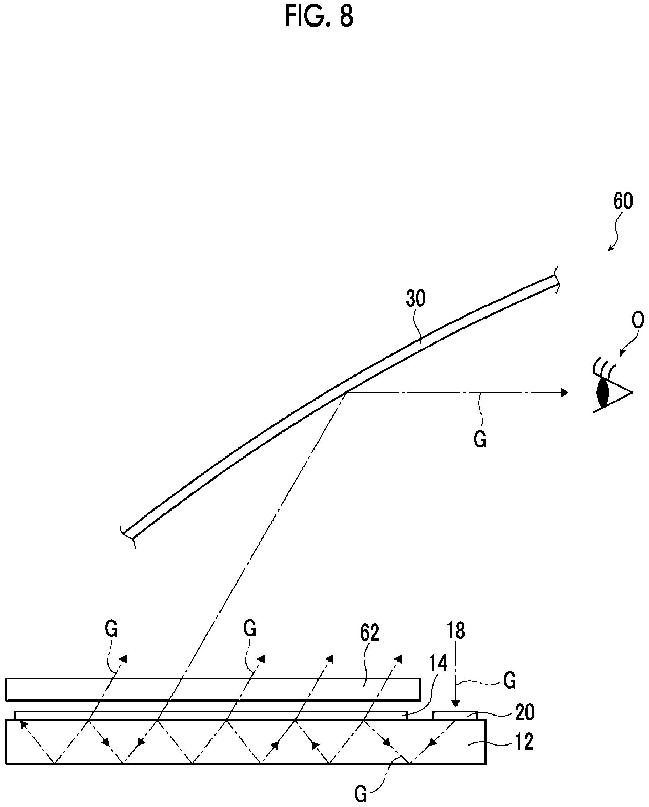

Fig. 8 conceptually shows an example of a virtual image display apparatus according to a third aspect of the present invention.

A virtual image display apparatus 60 according to the third aspect of the present invention has the same basic configuration as the above-described HUD 10 according to the first aspect, and includes an uneven structure 62 on the emission side of the image light G of the emission diffraction element 14 instead of the first polarizer 16.

Hereinafter, the virtual image display apparatus 60 will also be referred to as the HUD 60.

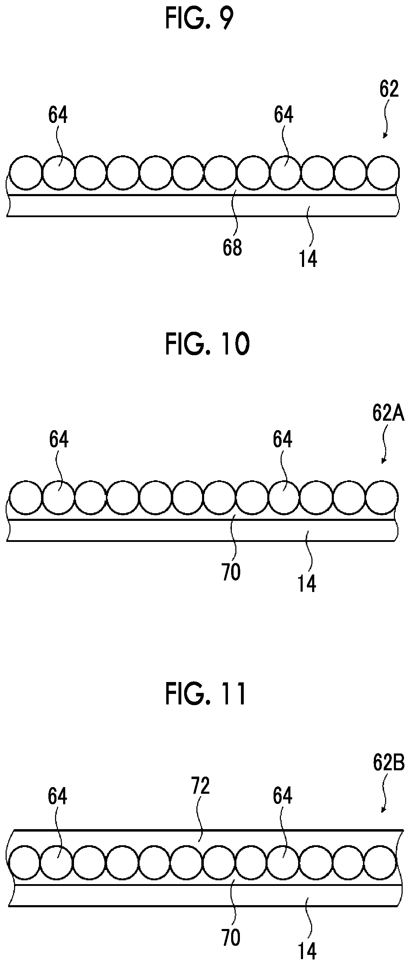

Fig. 9 conceptually shows an example of the uneven structure.

The uneven structure 62 shown in Fig. 9 is a sheet-like structure having unevenness on a surface opposite to the emission diffraction element 14, in which in the example shown in the drawing, an adhesive layer 68 is provided on the surface of the emission diffraction element 14, and transparent microbeads 64 are uniformly scattered and are two-dimensionally arranged and fixed on the adhesive layer 68.

By including the uneven structure 62 on the emission side of the image light G of the emission diffraction element 14, external light such as sunlight that is interference light is incident into the microbeads 64 of the uneven structure 62, returns to the incidence direction by retroreflection, and are scattered. As a result, likewise, external light incident into the light guide plate 12 can be significantly suppressed, interference light to be observed by the user O can be reduced, and glare of the image observed by the user O and dizziness of the user by the interference light can be suppressed.

The microbeads 64 (micro grains) are not limited, and various well-known microbeads can be used as long as they have sufficient optical transmittance.

Examples of the microbeads 64 include microbeads of BaO-SiO₂-TiO₂ glass and microbeads of BaO-ZnO-TiO₂ glass. Refractive indices of the microbeads are about 1.9 to 2.2

In addition, the particle diameter of the microbeads 64 are not limited and may be appropriately set depending on the area of the light guide plate 12 and the like. The particle diameter of the microbeads 64 is preferably 30 to 80 µm.

The adhesive layer 68 that fixes the microbeads 64 is not limited, and various resins can be used as long as they have excellent adhesiveness to the microbeads 64 and sufficient transparency. Examples of the resins include a polyethylene resin, an acrylic resin, a urethane resin, and a silicone resin.

The uneven structure may be directly provided on the emission diffraction element 14 as in the example shown in the drawing. However, in the uneven structure, it is preferable that a resin film such as a polyethylene terephthalate film, a polyethylene naphthalate film, or a TAC film is used as a support, the adhesive layer 68 is provided on a surface of the support, and the microbeads 64 are fixed to the adhesive layer 68.

In the uneven structure used for the HUD 60 according to the embodiment of the present invention, a reflective layer (light reflecting layer) 70 may be provided on an incidence side of the image light G of the uneven structure as in an uneven structure 62A shown in Fig. 10.

The uneven structure includes the reflective layer 70 such that retroreflection performance by the uneven structure 62A can be improved. As a result, external light incident into the light guide plate 12 can be further suppressed, interference light to be observed by the user O can be reduced, and glare of the image observed by the user O and dizziness of the user by the interference light can be more suitably suppressed.

The reflective layer 70 is not limited, and various well-known reflective layers can be used as long as they have sufficient transparency.

In this case, the reflective layer 70 may act as the adhesive layer 68. In addition, the reflective layer 70 may be provided on the incidence side of the image light G of the adhesive layer 68, that is, the side opposite to the microbeads 64 (uneven structure).

As the reflective layer 70, various well-known layers that allow transmission of light (visible light) can be used. For example, a reflective layer where a cholesteric liquid crystal obtained by immobilizing a cholesteric liquid crystalline phase is used as a reflective material can be suitably used.

As the reflective layer 70 where the cholesteric liquid crystal is used as the reflective material, reflective layers formed by various methods can be used. For example, a reflective layer where a cholesteric liquid crystal pigment is dispersed in a matrix can be used. Specifically, for example, a coating material including the cholesteric liquid crystal pigment as a matrix, an ink, an adhesive, and the like are mixed to prepare a coating material, and this coating material is printed or applied and dried (cured) to form a reflective layer.

It is preferable that the matrix has high transparency.

As the cholesteric liquid crystal pigment, various pigments can be used as long as they can exhibit the cholesteric liquid crystal characteristics by printing, application, or the like. A method of manufacturing the cholesteric liquid crystal pigment is well-known.

For example, JP1995-304983A (JP-H7-304983A) describes the following method as a method of manufacturing the cholesteric liquid crystal pigment. In this method, first, a three-dimensionally crosslinkable liquid crystal material such as a liquid crystal polysiloxane is applied and aligned to a sheet substrate with a well-known method such as a method using knife coating or a method of shearing between two sheets. Next, the liquid crystal material is crosslinked using thermal, photochemical, or other well-known method, and is peeled from the substrate and pulverized. As a result, the cholesteric liquid crystal pigment can be obtained.

As the cholesteric liquid crystal pigment, a commercially available product can also be used. Examples of the commercially available product of the cholesteric liquid crystal pigment include "HELICONE HC" (manufactured by Wacker Asahikasei Silicone Co., Ltd.). "HELICONE HC" is a flat powder having an extremely large average particle diameter with respect to the thickness, in which a helical axis of a cholesteric liquid crystal is directed to a thickness direction. Therefore, "HELICONE HC" can be disposed on an object with high aligning properties.

As the cholesteric liquid crystal pigment, optionally, plural kinds of pigments having different wavelengths of light components to be selectively reflected may be used.

The thickness of the reflective layer 70 is not limited and is preferably about 10 to 100 µm.

In a case where the particle diameter of the cholesteric liquid crystal pigment in the reflective layer 70 is too small or the concentration thereof is too low, there is a case where retroreflected light by selective reflection is not sufficiently visible at this layer thickness. Accordingly, the particle diameter and the concentration of the cholesteric liquid crystal pigment in the cholesteric liquid crystal layer may be appropriately determined such that desired retroreflection performance can be obtained. Although depending on the kind of the cholesteric liquid crystal pigment, for example, the particle diameter of the cholesteric liquid crystal pigment is 10 to 1000 µm, and the concentration thereof is 1 to 20 mass%.

The reflective layer 70 is not limited as long as it is formed of a cholesteric liquid crystal, and various well-known reflective layers can be used.

Examples of the reflective layer 70 include a reflective layer including, as a reflective material, a metal oxide-coated flaky powder (pearl pigment) having an interference color, a metal such as aluminum, a metal oxide, a colorant, or the like.

In addition, optionally, titanium dioxide powder or the like may be mixed in the reflective layer 70 to suppress the tint.

The uneven structure used for the HUD 60 according to the embodiment of the present invention may include a planarizing film 72 that planarizes the surface of the uneven structure as in an uneven structure 62B shown in Fig. 11.

It is preferable that the uneven structure includes the planarizing film 72 from the viewpoints that, for example, the microbeads 64 can be protected and foreign matter attached to the surfaces of the microbeads 64 (uneven structure) are likely to be removed. In addition, the planarizing film 72 may also have an action of adjusting the focal point of the retroreflected light by the microbeads 64.

The uneven structure 62B shown in Fig. 11 includes the reflective layer 70. The uneven structure including the planarizing film 72 may include the adhesive layer 68 instead of the reflective layer 70.

The planarizing film 72 is not limited, and various well-known resin films can be used as long as they have sufficient transparency, strength, and heat resistance. Preferable examples of the resin for forming the planarizing film 72 include a polyethylene resin, an acrylic resin, a urethane resin, and a silicone resin.

A crosslinking agent may be added to the planarizing film 72 to improve the film hardness and the adhesive strength with the microbeads 64.

In the present invention, it is preferable that a difference in refractive index between the planarizing film 72 and the uneven structure, that is, the microbeads 64 in the example shown in the drawing is small.

The difference in refractive index between the planarizing film 72 and the uneven structure is preferably 0.3 or less, more preferably 0.15 or less, still more preferably 0.1 or less, and most preferably zero, that is, a configuration where the refractive indices thereof are the same.

It is preferable that the difference in refractive index between the planarizing film 72 and the uneven structure is 0.3 or less from the viewpoints that, for example, the retroreflection performance by the uneven structure (microbeads 64) can be suitably exhibited and diffused reflection of light on the surfaces of the microbeads 64 can be prevented.

The planarizing film 72 may be formed using a well-known method such as a coating method depending on a forming material.

In addition, the thickness of the planarizing film 72 is not also limited and may be appropriately set depending on the forming material, the particle diameter of the microbeads 64, and the like such that the planarizing film 72 can completely embed the microbeads 64 and planarize the surfaces thereof and a required strength or the like can be obtained.

The virtual image display apparatus according to the embodiment of the present invention can be suitably used for a HUD mounted on various transportations including a vehicle such as an automobile or a train, an airplane, or a ship.

The virtual image display apparatus according to the embodiment of the present invention can be used not only for the transportations but also for various uses.

Hereinabove, the virtual image display apparatus according to the embodiment of the present invention has been described in detail. However, the present invention is not limited to the above-described examples, and various improvements and modifications can be made within a range not departing from the scope of the present invention.

### Examples

Hereinafter, the present invention will be described in more detail with reference to examples of the present invention. The materials, the reagents, the amounts of substances and the proportions of the substances, the operations, and the like shown in the following Examples, Comparative Examples, and Preparation Examples can be appropriately changed within a range not departing from the scope of the present invention. Accordingly, the scope of the present invention is not limited to the following Examples and Reference Examples.

### <Preparation of First Polarizer>

3.04 g of a liquid crystal compound (PALIOCOLOR LC242, manufactured by BASF SE) having a photopolymerizable group and 0.1 g of a polymer surfactant (MEGAFACE F780F, manufactured by DIC Corporation) were dissolved in 5.07 g of methyl ethyl ketone (MEK) to prepare a liquid crystal solution, 1.11 g of an initiator solution was added to the liquid crystal solution, and the solution was stirred for 5 minutes to completely dissolve the components. The initiator solution is a solution where 0.90 g of IRGACURE 907 (manufactured by Ciba Specialty Chemicals Inc.) and 0.30 g of KAYACURE DETX (manufactured by Nippon Kayaku Co., Ltd.) were dissolved in 8.80 g of MEK.

Next, 0.023 g of a dichroic azo coloring agent G241 (manufactured by Nagase Viita Co., Ltd.) and 0.005 g of a dichroic azo coloring agent G472 (manufactured by Nagase Viita Co., Ltd.) were added to the prepared solution, and the solution was ultrasonically dispersed for 5 minutes to prepare a polarizing film coating liquid.

On the other hand, using the same method as that of Example 20 of WO2014/112575A, a triacetyl cellulose film (TAC film) having a thickness of 40 µm was prepared.

A 10 mass% polyvinyl alcohol (PVA, MP203, manufactured by Kuraray Co., Ltd.) aqueous solution was applied by spin coating to the prepared TAC film under conditions of a rotation speed of 500 rpm and 15 seconds, and was dried to form a PVA vertical alignment film.

Next, the prepared polarizing film coating liquid was applied to the formed PVA vertical alignment film by spin coating under conditions of a rotation speed of 1,000 rpm and 20 seconds.

Next, by heating the PVA vertical alignment film for 2 minutes in a constant-temperature tank set to 90°C and irradiating (200 W, 73 mJ/cm²) the PVA vertical alignment film with ultraviolet light using a mercury xenon lamp in the heated state, a polarizing film where not only curable liquid crystal molecules but also the dichroic coloring agent are vertically aligned on the surface of the PVA vertical alignment film was formed on the TAC film to prepare a first polarizer.

### <Preparation of Structure (Louver) where Metal Plates were Arranged>

As metal plates, aluminum plates having a thickness of 1 mm, a height of 10 mm, and a width of 200 mm were prepared.

By arranging the metal plates on an acrylic transparent substrate at an interval of 10 mm to stand in parallel, a louver was prepared (refer to Figs. 6 and 7). The metal plates were fixed using an ultraviolet curable adhesive (UVX-5457, manufactured by Toagosei Co., Ltd.).

### <Preparation of Uneven Structure 1>

A polyethylene resin was applied with a thickness of about 25 µm to an upper surface of a TAC film having a thickness of 40 µm using a comma coater.

Before completely curing the polyethylene resin, glass beads (refractive index: 1.92, particle diameter: 38 to 53 µm) were uniformly scattered on the polyethylene resin and were heated and dried such that lower hemispheres were embedded in and fixed to the polyethylene resin.

Further, a polyethylene resin for adjusting the focal point of the retroreflected light was applied to non-embedded upper hemispherical surfaces of the glass beads and was heated and dried to seal and fix the entire glass beads in the polyethylene resin. As a result, an uneven structure 1 including a planarizing film was prepared.

### <Preparation of Uneven Structure 2>

1 g of a reflective material (cholesteric liquid crystal pigment) and 15 g of a nitrocellulose lacquer were mixed and stirred to be dispersed. As a result, a coating liquid for a reflective layer was prepared.

As the reflective material (cholesteric liquid crystal pigment), HELICONE HC SCARAB XL (manufactured by Wacker Asahikasei Silicone Co., Ltd.) was used. Regarding the cholesteric liquid crystal pigment, the color of the external appearance was light yellow white, the color of light to be selectively reflected was green, and the average particle diameter was about 500 µm.

In addition, as the nitrocellulose lacquer, nitrocellulose lacquer LC-21 (manufactured by Gen Gen Corporation) was used.

The coating liquid for a reflective layer was drawn down using a doctor blade with a margin of 101 µm to fixed surfaces (polyethylene resin layer surfaces) of glass beads of the uneven structure 1 prepared in advance, and was dried to prepare an uneven structure 2 including a reflective layer having a thickness of about 5 µm.

### [Example]

A light guide plate shown in Fig. 2 including an incidence diffraction element, an intermediate diffraction element, and an emission diffraction element on one surface was prepared.

The light guide plate had a thickness of 10 mm, was formed of an acrylic resin, and had a size of 200 × 200 mm.

All the diffraction elements were holographic diffraction elements and were disposed as shown in Fig. 2, in which the size of the incidence diffraction element was 10 × 5 mm, the size of the intermediate diffraction element was 185 × 10 mm, and the size of the emission diffraction element was 185 × 175 mm. The diffraction elements were fixed using an ultraviolet curable adhesive (UVX-5457, manufactured by Toagosei Co., Ltd.). Diffraction characteristics of the diffraction elements are as described above.

The light guide plate where the diffraction elements were provided was disposed on a dashboard of an automobile.

In addition, an image display device was provided such that an image was incident from the incidence diffraction element into the light guide plate. As the image display device, a laser scanning projection unit was used.

The first polarizer (Example 1), the louver (Example 2), the uneven structure 1 (Example 3), and the uneven structure 2 (Example 4) were provided on the emission diffraction elements of the light guide plates, respectively. As a result, four kinds of virtual image display apparatuses according to the embodiment of the present invention were prepared. In addition, in Comparative Example, a virtual image display apparatus including nothing on the emission diffraction element was prepared.

A green monochromic image was displayed by the image display device, and the image (projection image) projected from a windshield was observed.

As a result, it was verified that, in the virtual image display apparatuses according to Examples 1 to 4, as compared to the virtual image display apparatus according to Comparative Example, glare and dizziness of an image by sunlight were reduced.

As can be seen from the above results, the effects of the present invention are obvious.

The present invention can be suitably used for a HUD or the like mounted on a vehicle or the like.

### Explanation of References

10, 50, 60, 100: HUD (virtual image display apparatus)
12, 132: light guide plate
14, 136: emission diffraction element
16: first polarizer
18, 130: image display device
20, 134: incidence diffraction element
24: intermediate diffraction element
30, 126: windshield
34: mirror
40: dichroic substance
42: second polarizer
54: louver (structure)
62, 62A, 62B: uneven structure
64: microbead
68: adhesive layer
70: reflective layer
72: planarizing film
112: image display unit
116: reflecting mirror
118: concave mirror
120: dashboard
124: transmission window
26: windshield
130: image display device
131: projection lens
138: optical filter

## Claims

1. A virtual image display apparatus for a head-up display, comprising:
an image display device that emits image light;
a light guide plate that guides the image light emitted from the image display device;
an emission element that emits the image light guided in the light guide plate from the light guide plate; and
a first polarizer that is provided on an emission side of the image light of the emission element and has an absorption axis parallel to or tilted with respect to a normal line.

2. The virtual image display apparatus according to claim 1,
wherein an angle between the normal line of the first polarizer and the absorption axis of the first polarizer is 0° to 70°.

3. The virtual image display apparatus according to claim 1 or 2, further comprising:
a second polarizer that is provided on the emission side of the emission element and has an absorption axis in a direction orthogonal to a normal line.

4. The virtual image display apparatus according to claim 1 or 2,
wherein the emission element is a diffraction element.

5. A virtual image display apparatus for a head-up display, comprising:
an image display device that emits image light;
a light guide plate that guides the image light emitted from the image display device;
an emission element that emits the image light guided in the light guide plate from the light guide plate; and
a structure that is provided on an emission side of the image light of the emission element and where a plurality of metal plates standing from the emission element are arranged.

6. The virtual image display apparatus according to claim 5,
wherein an angle between a normal line of the light guide plate and the metal plate is 0° to 70°.

7. The virtual image display apparatus according to claim 5 or 6,
wherein the metal plate has light absorbing properties.

8. The virtual image display apparatus according to claim 5 or 6,
wherein the emission element is a diffraction element.

9. A virtual image display apparatus for a head-up display, comprising:
an image display device that emits image light;
a light guide plate that guides the image light emitted from the image display device;
an emission element that emits the image light guided in the light guide plate from the light guide plate; and
an uneven structure that is provided on an emission side of the image light of the emission element.

10. The virtual image display apparatus according to claim 9, further comprising:
a light reflecting layer that is provided between the emission element and the uneven structure.

11. The virtual image display apparatus according to claim 9 or 10, further comprising:
a planarizing film that planarizes a surface of the uneven structure.

12. The virtual image display apparatus according to claim 11,
wherein a difference in refractive index between the planarizing film and the uneven structure is 0.3 or less.

13. The virtual image display apparatus according to claim 9 or 10,
wherein the emission element is a diffraction element.
